# EUROPÄISCHE PATENTSCHRIFT

(11) **EP 2 580 083 B1**
(45) Veröffentlichungstag und Bekanntmachung des Hinweises auf die Patenterteilung: **13.02.2019**
(21) Anmeldenummer: 11721547.5
(22) Anmeldetag: 26.05.2011
(51) Int. Cl.: B60K 35/00, G01P 1/08

(54) **MODULARES ZENTRALINSTRUMENT**
MODULAR CENTRAL INSTRUMENT
INSTRUMENT DE BORD MODULAIRE

(30) Priorität: 14.06.2010 DE 102010030017
(43) Veröffentlichungstag der Anmeldung: 17.04.2013
(73) Patentinhaber: Bayerische Motoren Werke Aktiengesellschaft, 80809 München (DE)
(72) Erfinder: FRIEDRICH, Georg, 80999 Muenchen (DE); SCHAMBECK, Bernhard, 82237 Wörthsee (DE)
(86) Internationale Anmeldenummer: PCT/EP2011/058659
(87) Internationale Veröffentlichungsnummer: WO 2011/157525

(56) Entgegenhaltungen:
- EP-A2- 0 900 686
- WO-A1-98/38059
- DE-A1- 4 325 721
- DE-A1- 10 144 615
- DE-A1-102007 029 033
- DE-U1- 29 703 904

## Beschreibung

Die Erfindung betrifft ein modulares Zentralinstrument im Cockpit eines Kraftfahrzeugs mit einem runden, vorzugsweise kreisförmigen Display, in welchem eine Mehrzahl an fahrzeugrelevanten Informationen dargestellt ist.

Ein derartiges Zentralinstrument ist aus der DE 10 2006 047 055 A1 bekannt.
Es ist vorzugsweise als Grafikmodul ausgebildet, das die graphisch hochwertige Anzeigefunktion für Fahr- und Infotainment-Informationen übernimmt. Das Display ist vorzugsweise ein vollgrafisches Flüssigkristall-Display. Dieses Display ermöglicht eine hohe Flexibilität bei der Darstellung der Fahr- und Infotainment-Funktionen.

Das Dokument DE 10 144 615 offenbart den Oberbegriff des Anspruchs 1.

Die Aufgabe der vorliegenden Erfindung besteht darin, ein Zentralinstrument der eingangs genannten Art zu schaffen, das den Aussagewert der im Display dargestellten Informationen erhöht.

Diese Aufgabe wird durch ein Zentralinstrument mit den Merkmalen des Patentanspruchs 1 gelöst.
Vorteilhafte Aus- und Weiterbildungen, welche einzeln oder in Kombination miteinander eingesetzt werden können, sind der Gegenstand der abhängigen Ansprüche.

Das erfindungsgemäße Zentralinstrument zeichnet sich dadurch aus, dass die am kreisförmigen oder ovalen Rand angeordneten Leuchtmittel durch seine variable Farbgestaltung den Aufmerksamkeitswert der im Display wiedergegebenen Information unterstreicht. Wird im Display beispielsweise der Wert der Fahrzeuggeschwindigkeit mittels eines Zeigerinstrument wiedergegeben und liegt der momentane Wert über dem aktuell zulässigen und beispielsweise durch ein Bilderkennungssystem an Hand der am Straßenrand aufgestellten Schilder erkannten Wert, können die Leuchtmittel am Rande rot gefärbt sein. Bewegt sich das Fahrzeug innerhalb der zulässigen Höchstgeschwindigkeit, wird der Rand beispielsweise grün eingefärbt.

Die Leuchtmittel ihrerseits können LEDs, EL Folien, OLED, Laser oder aber ein Randbereich des Displays selbst sein, der entsprechend der Erfindung farblich variabel gestaltet ist. Das erzeugte Licht kann dabei entweder direkt ausgestrahlt werden oder indirekt über z.B. Lichtleiterfasern.

Bilden die Leuchtmittel einer Farbe jeweils für sich einen zumindest annähernd geschlossenen Kreis, lassen sich durch die Ringstruktur der Leuchtmittel besondere Lichtfiguren erzeugen. So kann eine umlaufende Lichtwelle erzeugt werden, indem mehrere nebeneinander liegende Leuchtmittel im Uhrzeiger- oder Gegenuhrzeigersinn um das Display scheinbar herumlaufen. In der jeweiligen Bewegungsrichtung wird das jeweils vorausliegende Leuchtmittel eingeschaltet, während gleichzeitig das jeweils letzte ausgeschaltet wird. Es können auch mehrere mit gleichem Umlaufsinn umlaufende Lichtwellen oder zwei gegenläufige Lichtwellen gebildet werden. Damit wird es möglich, beispielsweise zu Beginn einer Fahrt die Fahrbereitschaft zu signalisieren oder auf besondere Gefahrensituationen aufmerksam zu machen. Dies bietet die Möglichkeit, die Leuchtmittel zusätzlich zu ggf. im Display dargestellten Informationen über kritische Temperaturwerte von Fahrzeugkomponenten wie Verbrennungsmotor und Kühlwasser oder Vorratsmengen von Betriebsmitteln wie Waschwasser, Kraftstoff bzw. Antriebsenergie einzusetzen, um allein durch die Lichtfigur den Fahrzeugbenutzer auf diese besonderen Situationen aufmerksam zu machen.

Eine besonders einprägsame Aussage über die durch die Lichtfigur repräsentierte Größe ergibt sich, wenn die durch die Leuchtmittel gebildete Lichtfigur symmetrisch bezüglich eines Display-Meridians ist. Der Meridian ist eine gedachte Linie, die von oben nach unten verläuft und eine Symmetrielinie bildet. Ist die Lichtfigur symmetrisch zu dieser Linie, ergeben rhythmisch angesteuerte Leuchtmittel einen pulsierenden Effekt, der seinerseits ohne Weiteres als sinnbildlicher Ausdruck für fahrzeugrelevante Funktionen wie bestehende oder eingeschränkte Funktionsfähigkeit des Fahrzeugs oder beispielsweise eine willkürlich aktivierte Richtungsanzeige interpretiert werden kann.

Der Randkörper kann demontierbar und folglich ersetzbar sein. Dadurch lässt sich die Anzeigefunktion während der Laufzeit des Fahrzeugs ändern. Verbunden mit einer Änderung der Programmierung für die im Display angezeigte Information ist es dadurch beispielsweise möglich, an Stelle oder zusätzlich zu der Anzeige der Fahrzeuggeschwindigkeit die Drehzahl des Antriebsaggregats darzustellen. Dies wird dann mit besonders geringem Aufwand realisiert, wenn der Randkörper eine oder mehrere Skalen für die im Display dargestellten Funktionen trägt und oder die am Rand angeordneten Leuchtmittel teilweise bedeckt.

Zusätzlich kann der Randkörper auch dafür verwendet werden, spezielle Oberflächeneffekte zu realisieren. Beispiele für Oberflächeneffekte sind eine matte, eine Hochglanz-polierte, eine farbige, eine chromatische oder eine spiegelnde Oberfläche oder eine Oberfläche mit Black-Panel oder Glaseffekt.

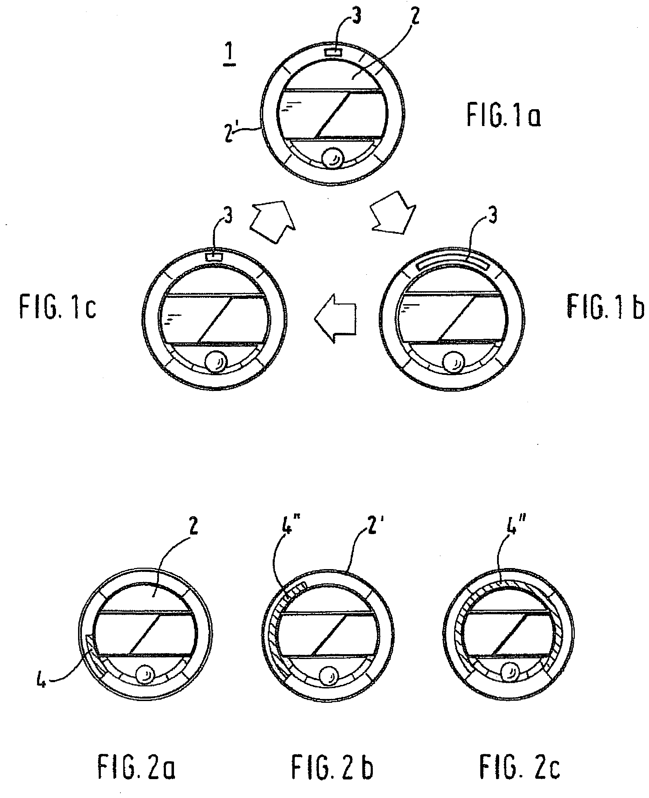

Zwei Ausführungsbeispiele sind in den Figuren 1 und 2 dargestellt. Sie dienen dazu, die Erfindung näher zu erläutern.

Beim Ausführungsbeispiel von Fig. 1 wird bei ruhendem Fahrzeug die Betriebsbereitschaft und/oder der Schaltzustand "ein" der Diebstahlwarnanlage signalisiert. Dazu werden im Zentralinstrument 1 bei ausgeschaltetem Display 2 die im oberen Bereich des Randes 2' angeordneten roten LEDs 3 abwechselnd in einem Winkel von 10° (Fig. 1 a), 40° (Fig. 1 b) und wieder 10° (Fig. 1 c) eingeschaltet. Der Wechsel zwischen den Lichtfiguren von Fig. 1a, 1b und 1c erfolgt mit einer Frequenz von 60 Hz. Zwischen den Lichtfiguren von Fig. 1a und Fig. 1c liegt eine Ruhepause von 1 sec, in der alle LEDs ausgeschaltet sind. Die insgesamt sich ergebende Lichtfigur symbolisiert ein schlagendes Herz und zeigt, dass das Fahrzeug eingeschränkt aktiv ist.

Bei dieser Funktionsanzeige wird der Zustand des Fahrzeugs entsprechend einem Herzschlag symbolisiert. Der bestimmende Parameter dabei kann die Temperatur eines Verbrennungsmotors sein. Dasselbe gilt während eines Start-Stopp-Betriebs. Dem Energiebordnetz steht weniger Energie als während einer Fahrt zur Verfügung und es wird Energie gespart. Dieser Zustand wird ebenso über einen ruhigen Pulsschlag veranschaulicht. Während vor einer Fahrt der Motor in der Regel kalt und das Fahrzeug einsatzbereit ist, was durch einen gleichmäßigen "Pulsschlag" von 60 Hz symbolisiert wird, kann der demnächst zu Ende gehende Energievorrat am Ende einer Fahrt durch ein abgeschwächtes Aufleuchten derselben LEDs 3 mit verringerter Frequenz von 30 Hz symbolisiert werden.

Ist bei Fahrtende der Motor zwar warm und kühlt langsam wieder ab, während der Energievorrat noch völlig ausreichend ist, kann dies durch eine Lichtfigur symbolisiert werden, die durch eine erhöhte Frequenz von z.B. 90 Hz und eine Verbreiterung der Lichtfigur auf 60°, d.h. einen hochfrequenten und energiereichen "Pulsschlag" verdeutlicht, der allmählich und mit zunehmender Abkühlung des Motors in den o.g. Ruhezustand übergeht.

Schließlich erhält der Fahrzeugnutzer beim Ausführungsbeispiel von Fig. 2 eine Unterstützung in seiner Absicht, besonders ökonomisch zu fahren. Dabei läuft ein sich zunehmend vergrößernder und vervollständigender Kreis 4,4' und 4" um das Display 2 herum. Dies ist in Fig. 2a, 2b und 2c dargestellt. Der Kreis ist gebildet beispielsweise aus grünen LEDs. Die Geschwindigkeit, mit der der Kreisring vergrößert wird, hängt von der Betriebsökonomie ab. Nimmt man hierfür beispielsweise den entsprechend den jeweiligen Betriebsbedingungen minimalen Kraftstoffverbrauch als Maßstab, so kann die Geschwindigkeit, mit der die Lichtfigur des vollständig ausgeleuchteten Kreises vergrößert wird, umso größer sein, je näher der aktuelle Verbrauch an dem idealen Wert liegt. Die Lichtfigur kann sich dabei auch zurückentwickeln, nämlich dann, wenn der Verbrauch außergewöhnlich hoch ist. Auch kann die Komplettierung eines Lichtkreises durch ein zusätzliches Symbol im Display, beispielsweise einen Stern (nicht dargestellt) symbolisiert werden. Der Lichtkreis 4 beginnt dann wieder von vorne. Am Ende einer Fahrt erhält der Fahrer durch die Anzahl der Sterne symbolisch eine Information über seine Fahreffizienz.
Auf diese Weise erhält der Fahrzeugnutzer mit Hilfe von Lichtfiguren einen wertvollen Hinweis für die Qualität der Funktionsfähigkeit des Fahrzeugs (Fig. 1) oder die Effizienz seiner Fahrweise (Fig. 2).
Nicht dargestellt in der Zeichnung ist eine weitere Ausgestaltung der Erfindung. Sie besteht darin, dass auf den Rand 2' eine kreisförmige Blende aufgesetzt ist, die mit einer Markierung versehen ist. Damit kann eine Skala realisiert werden und beispielsweise für das in Fig. 2 gezeigte Ausführungsbeispiel ein bewerteter Fortschrittsbalken erzielt werden. Der Fahrzeugnutzer erhält die Information, welcher %-Satz eines vollständigen Kreises bereits erreicht ist.

## Patentansprüche

1. Zentralinstrument im Cockpit eines Kraftfahrzeugs mit einem runden Display, in welchem eine Mehrzahl an fahrzeugrelevanten Informationen dargestellt ist, wobei das Display (2) an seinem Rand (2') mehrere in ihrer Helligkeit frei programmierbare Leuchtmittel (3) enthält, die während einer Betriebsphase des Kraftfahrzeugs variabel angesteuert sind und die eine zeitlich variierende Lichtfigur (3,4) erzeugen, die eine Aussage über den Zustand und/oder die Funktion des Kraftfahrzeugs und/oder einer Kraftfahrzeug-Komponente liefert,
und wobei die durch die Leuchtmittel gebildete Lichtfigur symmetrisch bezüglich eines Display-Meridians ist, der eine gedachte vertikale Symmetrielinie bildet,
**dadurch gekennzeichnet, dass** die zeitliche Variation der Lichtfigur durch rhythmische Ansteuerung einen pulsievenden Effekt der Leuchtmittel bewirkt wird.

2. Zentralinstrument nach Anspruch 1, **dadurch gekennzeichnet, dass** die Leuchtmittel (3) unterschiedliche Farben besitzen.

3. Zentralinstrument nach Anspruch 1 oder 2, **dadurch gekennzeichnet, dass** die Leuchtmittel einer Farbe jeweils für sich einen zumindest annähernd geschlossenen Ring bilden.

4. Zentralinstrument nach einem der vorhergehenden Ansprüche, **dadurch gekennzeichnet, dass** am Rand ein demontierbarer Randkörper angeordnet ist.

5. Zentralinstrument nach Anspruch 4, **dadurch gekennzeichnet, dass** der Randkörper eine Teil der Leuchtkörper bedeckt.

6. Zentralinstrument nach Anspruch 4 oder 5, **dadurch gekennzeichnet, dass** der Randkörper eine Skala trägt.

7. Zentralinstrument nach einem der Ansprüche 4 bis 6, **dadurch gekennzeichnet, dass** die Programmierung der Leuchtmittel auf die Ausgestaltung des Randkörpers abstimmbar ist und dass die Leuchtmittel für die Ausbildung mindestens eines individuellen Anzeigeinstruments ansteuerbar sind.

## Claims

1. A central instrument in the cockpit of a motor vehicle, comprising a circular display, in which multiple items of vehicle-relevant information are displayed, wherein the display (2), at its edge (2), contains a plurality of lighting means (3), which are freely programmable in respect of their brightness, which are controlled variably during an operating phase of the motor vehicle, and which generate a light figure (3, 4) thatvaries overtime and that provides a determination of the state and/or the function of the motor vehicle and/or a motor vehicle component, and wherein the light figure formed by the lighting means is symmetrical with respect to a display meridian, which forms an imaginary vertical line of symmetry, **characterised in that** a pulsating effect of the lighting means is brought about by the variation overtime of the light figure by rhythmic control.

2. A central instrument according to claim 1, **characterised in that** the lighting means (3) have different colours.

3. A central instrument according to claim 1 or 2, **characterised in that** the lighting means each form a colour for an at least approximately closed ring.

4. A central instrument according to any one of the preceding claims, **characterised in that** a demountable edge body is arranged on the edge.

5. A central instrument according to claim 4, **characterised in that** the edge body covers part of the illuminants.

6. A central instrument according to claim 4 or 5, **characterised in that** the edge body bears a scale.

7. A central instrument according to any one of claims 4 to 6, **characterised in that** the programming of the lighting means can be adapted to the design of the edge body, and **in that** the lighting means are controllable to form at least one individual display instrument.

## Revendications

1. Instrument central modulaire monté dans le poste de conduite d'un véhicule comportant un affichage circulaire sur lequel est représenté un ensemble d'informations importantes pour le véhicule, l'affichage (2) contenant sur son bord (2') plusieurs moyens lumineux (3) dont la clarté est librement programmable, qui sont commandés de manière variable pendant une phase de fonctionnement du véhicule, et qui produisent un motif lumineux (3, 4) variant dans le temps qui fournit un message concernant l'état et/ou le fonctionnement du véhicule et/ou d'un composant du véhicule, et, le motif lumineux formé par les moyens lumineux étant symétrique par rapport à une ligne méridienne de l'affichage qui forme un axe de symétrie vertical virtuel,
**caractérisé en ce que**
la variation dans le temps du motif lumineux est réalisée par une commande rythmée d'un effet pulsatoire des moyens lumineux.

2. Instrument central conforme à la revendication 1,
**caractérisé en ce que**
les moyens lumineux (3) ont différentes couleurs.

3. Instrument central conforme à la revendication 1 ou 2,
**caractérisé en ce que**
les moyens lumineux ayant une couleur forment respectivement par eux-mêmes un anneau au moins approximativement fermé.

4. Instrument central conforme à l'une des revendications précédentes,
**caractérisé en ce qu'**
un corps de bordure démontable est monté sur son bord.

5. Instrument central conforme à la revendication 4,
**caractérisé en ce que**
le corps de bordure recouvre une partie du corps lumineux.

6. Instrument central conforme à la revendication 4 ou 5,
**caractérisé en ce que**
le corps de bordure porte une échelle.

7. Instrument central conforme à l'une des revendications 4 à 6,
**caractérisé en ce que**
la programmation des moyens lumineux peut être adaptée sur la conformation du corps de bordure, et les moyens lumineux peuvent être commandés pour former au moins un instrument indicateur individuel.
